# FASCICULE DE BREVET EUROPEEN

(11) **EP 0 931 689 B1**
(45) Date de publication et mention de la délivrance du brevet: **07.08.2002**
(21) Numéro de dépôt: 99420013.7
(22) Date de dépôt: 19.01.1999
(51) Int. Cl.: B60N 2/00

(54) **Siège pour véhicule, amovible, retournable et réglable longitudinalement**
Kraftfahrzeugsitz, herausnehmbar, umwendbar und längsverstellbar
Vehicle seat, removable, reversible and longitudinally adjustable

(30) Priorité: 27.01.1998 FR 9801116
(43) Date de publication de la demande: 28.07.1999
(73) Titulaire: Grupo Antolin-Ingenieria S.A., 09080 Burgos (ES)
(72) Inventeur: Chabanne, Jean-Pierre, 89710 Champvallon (FR); Duchateau, Jean, 43330 Pont Salomon (FR)
(74) Mandataire: Perrier, Jean-Pierre

(56) Documents cités:
- EP-A- 0 537 078
- EP-A- 0 609 130
- EP-A- 0 749 864
- WO-A-92/02384
- US-A- 5 280 987

## Description

L'invention concerne un siège de véhicule, amovible, retournable et réglable longitudinalement.

Elle vise plus particulièrement, mais non exclusivement, les sièges utilisés dans les véhicules dont l'habitacle peut être transformé pour être adapté au nombre de personnes à transporter, en modifiant le nombre de sièges et/ou l'intervalle entre les sièges, ou pour augmenter la surface réservée aux bagages ou au frêt en enlevant certains sièges. Il en est ainsi par exemple dans les véhicules dénommés monospace, où certains sièges peuvent être retournés.

Elle concerne également l'adaptation de ces sièges aux nouvelles contraintes techniques imposant que chacun d'eux soit équipé des points d'ancrage de la ceinture de sécurité et que leur structure et leurs fixations au plancher, puissent résister à l'énergie d'un choc de caractéristiques définies.

Selon une première technique de fixation connue, chaque siège amovible est équipé, par exemple comme décrit dans FR-A-2 556 946 et US-A-4 759 580, de quatre pieds en forme de fourche dont certains sont équipés de verrous, avec leurs moyens de rappel en position verrouillée et leurs moyens de commande manuelle.

Lorsque le siège n'est pas réglable longitudinalement, les fourches s'enfourchent sur des tiges transversales ménagées dans des puits du plancher du véhicule, tandis que, lorsqu'il est réglable et disposé sur des coulisseaux, mobiles et blocables par rapport à des glissières fixées au plancher, les fourches coopèrent avec des moyens complémentaires portés par les coulisseaux, comme décrit dans FR-A-2 702 717.

Avec ce mode de fixation, chaque pied est équipé de ses moyens de positionnement et de fixation mais aussi de ses moyens de verrouillage. Cela présente l'inconvénient d'alourdir le siège, d'augmenter l'énergie humaine nécessaire pour le déplacer hors du véhicule, par exemple pour le stocker.

On notera que cette contrainte de poids conduit à limiter la section des verrous et, en conséquence, leur résistance.

Lorsque ce type de siège est en position de rangement, au moins ses pieds avant sont en saillie de l'assise et forment donc des proéminences pouvant être accrochées avec le risque de détériorer les verrous. A cela s'ajoute l'encrassement possible des verrous pendant le stockage hors du véhicule.

Dans une seconde technique de fabrication décrite dans GB-A-2 008 938, les quatre pieds sont en forme de tenon aptes, chacun, à coopérer avec des moyens de fixation complémentaires portés par le coulisseau, qui porte également les moyens de verrouillage de ces tenons. Cela simplifie la construction et allège les pieds, tout en éliminant les risques de détérioration et d'encrassage. Toutefois, ce dispositif n'est pas suffisamment résistant pour assurer la fixation d'un siège portant les points d'ancrage d'une ceinture de sécurité, comme cela est maintenant demandé pour les sièges amovibles, retournables et réglables. Le document US-A-5 280 987 décrit un siège suivant le préambule de la revendication 1.

La présente invention a donc pour objet de fournir un siège amovible, retournable et réglable longitudinalement, mettant en oeuvre des pieds en forme de tenon, donc peu sensible à l'encrassement ou aux détériorations, et dont la liaison avec les coulisseaux permet d'obtenir la résistance recherchée.

A cet effet, dans le siège selon l'invention, chacun des pieds comporte au moins une partie en saillie transversale, formant organe de rétention, tandis que le coulisseau correspondant comporte, dans sa zone de réception de chaque pied, au moins un verrou en forme de crochet, articulé sur lui, et apte à s'effacer lors de l'introduction dans le coulisseau de la saillie du pied correspondant, avant de revenir crocheter cette saillie, sous l'action de ses moyens de rappel, et que les moyens de déverrouillage manuels des verrous sont portés par chacun des pieds.

Ainsi, chaque pied est débarrassé des éléments fragiles que sont les verrous, puisque ceux-ci sont portés par le coulisseau. Ces verrous peuvent avoir une section résistante importante, sans que cela alourdisse le siège et assurer ainsi la retenue du siège et du passager, même en cas de choc. Il en est de même pour la ou les saillies équipant chaque pied qui peut, ou peuvent, présenter une section résistante importante.

Dans une forme d'exécution de l'invention, chacun des pieds porte, au-dessus de son extrémité inférieure, deux doigts cylindriques de rétention, transversaux et espacés longitudinalement, tandis que chaque coulisseau comporte, dans chacune de ses deux zones de réception d'un pied, deux verrous en forme de C montés en opposition et avec possibilité de rotation sur deux axes transversaux, ces deux axes traversant le coulisseau et portant sur leurs extrémités dépassant de ce coulisseau, des galets roulants dans des rainures longitudinales des glissières.

Avec cet agencement, les axes des verrous, qui peuvent être surdimensionnés, assurent une excellente tenue des verrous, tant en fonctionnement normal qu'en cas de choc. En effet, dans ce dernier cas, lorsque l'énergie du choc tend, par l'effort communiqué au siège, à extraire les doigts de rétention des crochets, ces derniers résistent bien, d'autant plus que l'effort qu'ils subissent, se répartit par leur axe d'articulation, non seulement sur le coulisseau et à travers lui sur la glissière, mais aussi par les galets fixés aux extrémités de ces axes dans les rainures de la glissière. En d'autres termes, ce montage améliore les surfaces résistantes intervenant en cas d'effort d'arrachement et augmente la résistance globale de la liaison du siège avec ses glissières fixées au plancher.

Avantageusement, les moyens de blocage de chaque coulisseau dans sa glissière comprennent :
- dans le coulisseau, au moins un levier articulé sur le coulisseau autour d'un axe transversal et dont une extrémité traversant le fond du coulisseau est dentée, en correspondance avec la denture d'une crémaillère rapportée sur le fond de la glissière, et une bascule coiffant le levier, disposée dans le coulisseau et portant un axe transversal de liaison avec l'autre extrémité du levier précité, cette bascule étant munie à chaque extrémité, de saillies latérales montées coulissantes dans des lumières verticales du coulisseau, et de moyens à ressorts plaquant lesdites saillies contre l'extrémité supérieure des lumières, en maintenant la denture du levier dans la crémaillère,
- et, sur la structure d'assise du siège, un poussoir apte à venir au-dessus de la bascule du coulisseau et saillant sensiblement verticalement vers le bas de la branche interne d'un levier, ledit levier étant articulé sur la structure d'assise et comportant une branche externe formant poignée de commande, ladite branche externe du levier étant attelée à la branche interne d'un autre levier de commande, articulé sur la même structure d'assise mais actionnable de l'autre côté du siège.

Ainsi, quelle que soit la position, tournée vers l'avant ou tournée vers l'arrière, du siège par rapport au coulisseau, il est toujours possible de modifier sa position longitudinale, donc de déplacer les coulisseaux dans les glissières, en actionnant l'une ou l'autre des commandes prévues à cet effet sur la partie avant ou sur la partie arrière de l'assise du siège. Cet aménagement est particulièrement intéressant car il permet, face à un besoin d'augmentation de la surface réservée aux bagages, de déplacer les sièges en les actionnant à partir de l'arrière du véhicule, sans avoir à passer par les portes latérales pour actionner la commande de déverrouillage des coulisseaux généralement disposée uniquement sous la partie avant du siège.

D'autres caractéristiques et avantages ressortiront de la description qui suit en référence au dessin schématique annexé représentant, à titre d'exemple, une forme d'exécution du siège selon l'invention.
Figure 1 est une vue de côté en élévation avec coupe partielle montrant, de manière simplifiée, les moyens de commande associés à la structure d'assise du siège et une glissière avec son coulisseau,
Figure 2 est une vue en perspective éclatée montrant les différents éléments faisant partie d'une glissière et de son coulisseau,
Figures 3, 4 et 5 sont des vues en coupe transversale, à échelle agrandie suivant, respectivement III-III, IV-IV et V-V de figure 6,
Figure 6 est une vue en coupe longitudinale brisée de l'une des glissières avec son coulisseau,
Figures 7 et 8 sont des vues partielles à échelle agrandie d'un pied avant et de ses verrous, respectivement dans la phase d'écartement des verrous, et dans la phase de verrouillage des doigts de rétention par ceux-ci,
Figures 9 et 10 sont des vues de côté d'un ensemble de verrous, lorsqu'ils sont respectivement en position de fermeture maximale et en position d'ouverture maximale,
Figure 11 est une vue schématique du siège lorsqu'il est en position rabattue sur l'avant,
Figure 12 est une vue en perspective montrant, à échelle agrandie, une forme de réalisation d'un bouchon de glissière avec enrouleur d'un ruban protecteur.

Dans ce dessin, la référence numérique 2 désigne, da manière générale, l'assise d'un siège sur laquelle est articulée, par des moyens connus et hors du domaine de l'invention, une structure de dossier 3, visible figure 11. La structure d'assise porte, de façon connue, deux pieds avant 4, articulés sur elle autour d'un axe transversal 5, et deux pieds arrière 6 articulés sur elle autour d'un axe transversal 7. Chacun de ces pieds comporte des moyens de fixation destinés à coopérer avec des moyens complémentaires disposés dans un coulisseau 8, mobile et blocable, par rapport à une glissière 9 fixée au plancher du véhicule.

Selon l'invention, chacun des pieds 4 et 6 est en forme de tenon et porte des moyens de rétention destinés à coopérer avec des moyens de verrouillage complémentaires disposés dans le coulisseau 8.

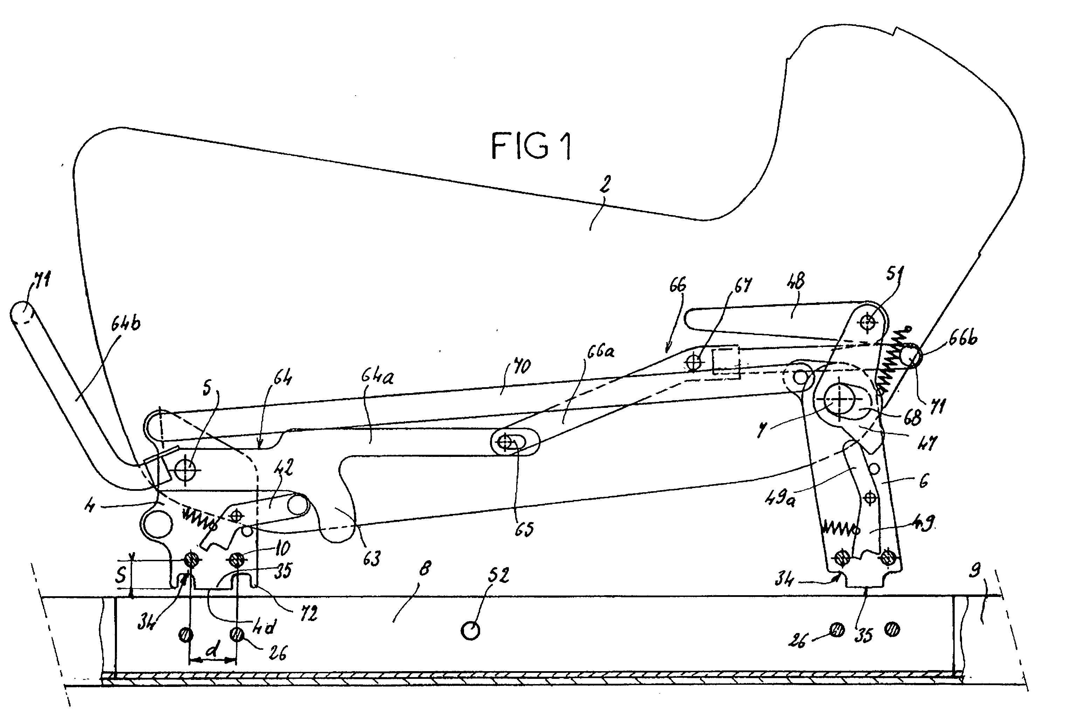

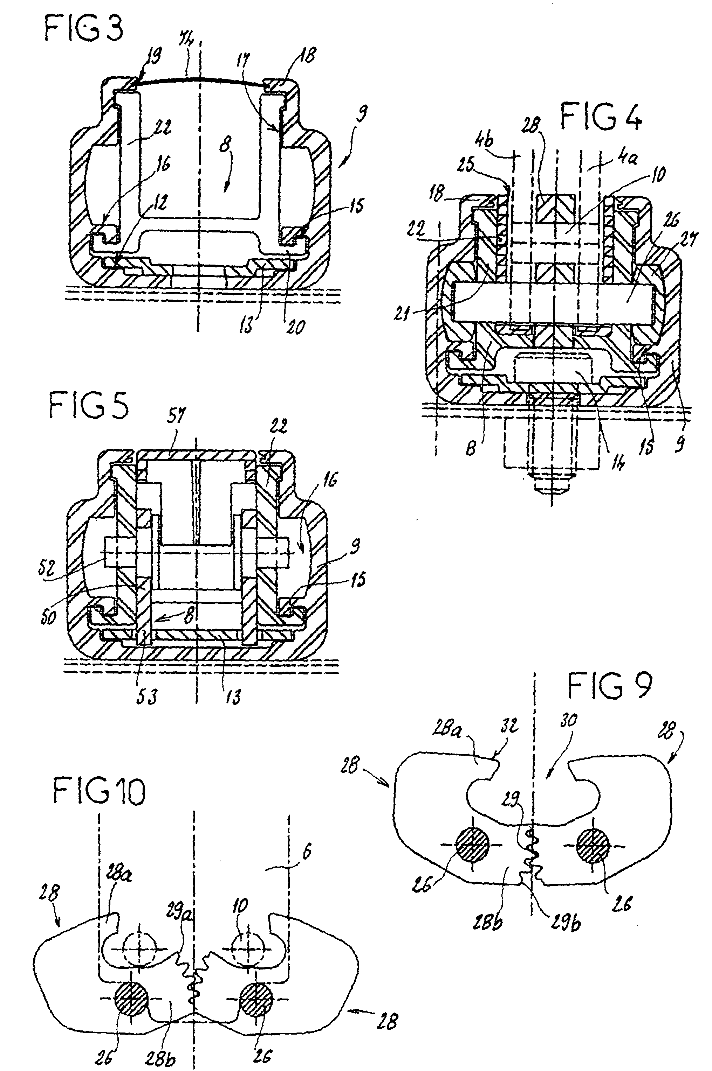

Dans la forme d'exécution représentée, chaque pied est constitué par deux lames métalliques 4a, 4b, visibles figure 4, qui sont espacées et reliées par deux doigts cylindriques 10, formant organes de rétention. Ces doigts sont disposés transversalement à la direction de déplacement du siège. Ils sont espacés longitudinalement l'un de l'autre par une distance d à la figure 1, et sont au-dessus de la face en bout inférieure 4d du pied correspondant, comme montré par la distance S à la figure 1. Les doigts de rétention 10 sont bien entendu liés solidement aux deux lames constituant le pied 4, par exemple par soudure.

Avant d'examiner les moyens avec lesquels coopèrent ces doigts, il va être procédé à la description des moyens de réglage de la position longitudinale du siège, et en particulier de l'une des glissières 9 et du coulisseau 8 qui lui est associé, et cela en référence aux figures 3 à 5.

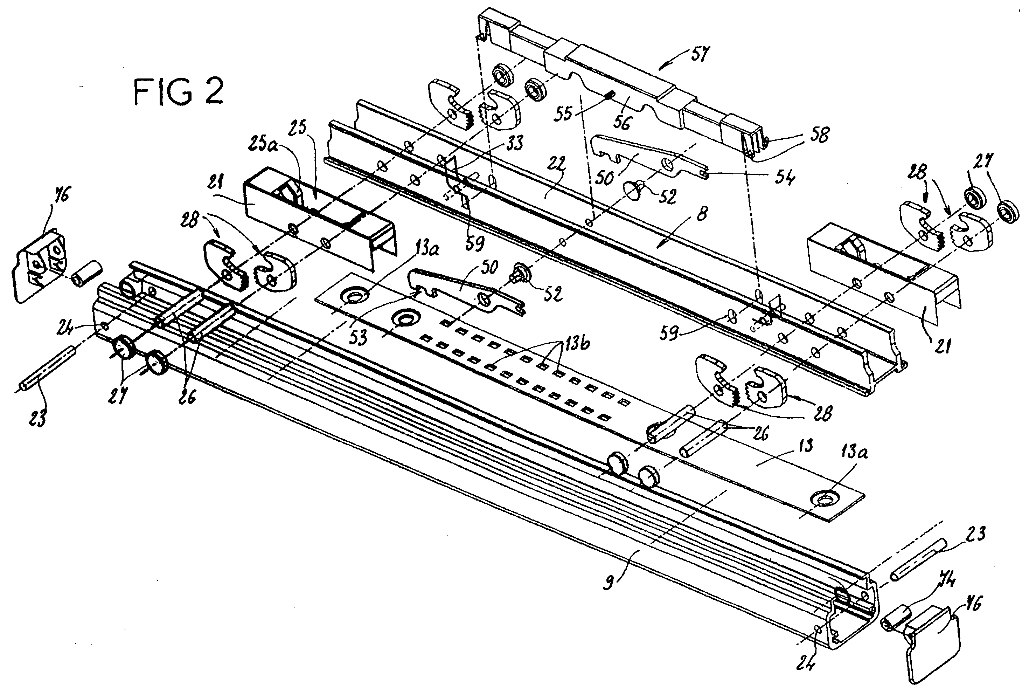

Chaque glissière est donc constituée par un profilé en alliage métallique léger, tel qu'en aluminium, qui, comme le montre la figure 3, présente, en section transversale, la forme générale d'un U. Dans le fond de la glissière, est ménagée une rainure 12 destinée à recevoir une crémaillère 13 en alliage métallique résistant, tel qu'en acier traité. Cette crémaillère comporte, comme montré à la figure 2, des alésages traversants 13a permettant sa fixation, sur la glissière, par des boulons 14, fixant celle-ci sur le plancher du véhicule, et une double rangée de perforations 13b formant deux dentures, dont l'utilité sera précisée plus loin. La glissière 9 comporte également, en allant du bas vers le haut, deux ailettes inférieures coudées opposées 15, deux rainures longitudinales opposées 16, un rétrécissement 17 et deux retours coudés supérieurs 18, dont les bords en vis à vis sont dotés de rainures 19.

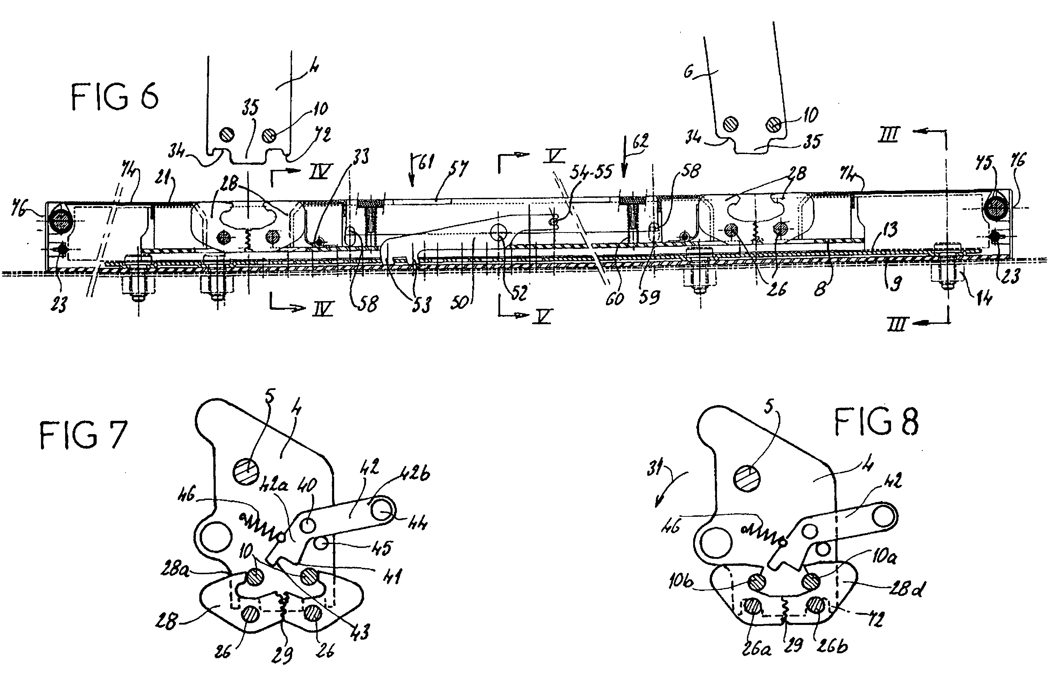

Comme montré à la figure 3, le coulisseau 8 présente en section transversale la forme générale d'un U dont l'âme 8a est prolongée de chaque côté par deux ailettes 20 se crochetant avec les ailettes 15 de la glissière et dont les deux ailes 22 coulissent dans le rétrécissement 17 de la glissière, sous les retours coudés 19. Le déplacement longitudinal du coulisseau 8 dans la glissière 9 est limité par des pions cylindriques 23, (figures 2 et 6), emmanchés de force dans des alésages cylindriques 24 ménagés dans les parois de la glissière, à chacune des extrémités de celle-ci.

Dans chacune de ses zones devant recevoir l'un des deux pieds d'un siège, le coulisseau 8 comporte un boîtier 21 présentant, en section transversale, la forme générale d'un U retourné et comportant, dans sa partie centrale, un puits 25 avec bords évasés 25a. Ce boîtier, qui par exemple est réalisé en matière synthétique, est fixé dans le coulisseau par deux axes transversaux 26 traversant les ailes 22 de ce coulisseau et recevant chacun, sur leurs extrémités externes au coulisseau, des galets 27 pouvant circuler dans les rainures 16 de la glissière.

Ces axes 26 constituent également axes d'articulation pour des verrous 28 qui, dans cette forme d'exécution, sont, comme montré à la figure 4, disposés sensiblement dans le plan médian de la glissière et de manière à pénétrer dans l'intervalle entre les lames 4a, 4b constituant un pied. En pratique, chaque verrou est composé d'un groupe de deux lames juxtaposées, mais pour simplifier la description, les lames seront considérées comme constituant un seul verrou.

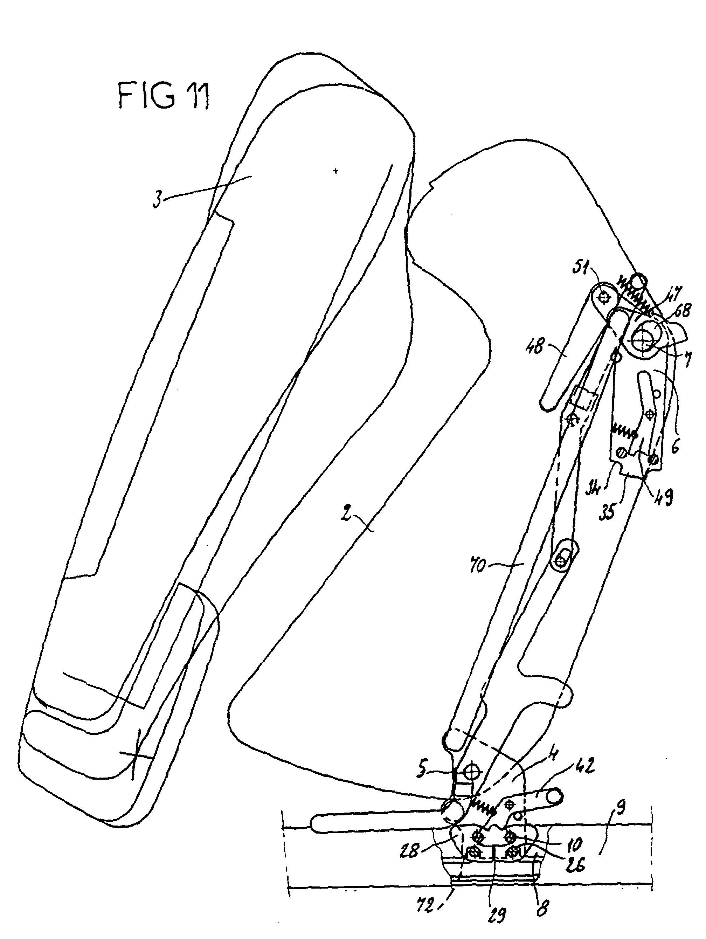

Les figures 9 et 10 montrent que les deux verrous 28 sont disposés en opposition sur les deux axes 26 et présentent chacun une forme en C à ailes inégales. Ainsi, chaque verrou comporte une aile inférieure longue 28b dont le bord libre est muni d'une denture 29, apte à s'engrener avec une denture complémentaire du verrou opposé. Cette denture comporte, à chacune de ses extrémités, des dents tronquées, respectivement 29a et 29b, qui limitent, respectivement, le rapprochement et l'éloignement des petites ailes 28a de ces verrous. Ces petites ailes délimitent entre elles une ouverture 30 et comportent chacune, sur leur bord supérieure, une face pentue 32 allant en direction de ladite ouverture et dont l'utilité sera précisée plus loin.

Enfin, et comme montré figure 6, sur l'un des verrous 28 de chaque groupe de verrous prend appui l'une des branches d'un ressort en épingle 33 dont l'autre branche prend appui sur l'âme 8a du coulisseau 8. En position de repos, les deux groupes de verrous sont dans la position représentée aux figures 6 et 9, c'est à dire sont en position de serrage maximum sous l'action du ressort de rappel 33, faisant basculer l'un d'eux en direction de l'autre, et générant un couple de pivotement qui se transmet à l'autre verrou par l'engrènement des deux dentures 29.

Lorsque les pieds 4 et 6 d'un siège sont amenés au-dessus des zones de réception, ménagées pour eux dans le coulisseau 8, ils sont d'abord positionnés par les bords évasés 25a des puits 25, ce qui a pour effet d'amener leurs doigts de rétention 10 en contact avec les faces pentues 32 des verrous 28. Sous l'action de cet appui, les faces pentues communiquent, à chaque verrou, un couple de basculement tendant à augmenter la dimension de l'ouverture 30, et cela jusqu'à ce que, comme montré à la figure 7, les doigts 10 pénètrent dans l'intervalle entre les petites branches 28a des verrous. Dès que ces doigts parviennent dans le crochet délimité entre les deux branches 28a-28b de chaque verrou, les ressorts 33 correspondants ramènent le verrou en position de fermeture, comme montré à la figure 8, en assurant le crochetage des doigts de rétention 10.

Durant cet engagement, la pénétration du pied 4 dans le coulisseau 8 est limitée par contact d'une face de butée avec une face complémentaire du coulisseau. Dans une forme d'exécution non représentée, la face de butée de chaque pied est constituée par sa face en bout 4b qui vient en contact avec le fond du coulisseau.

Dans la forme d'exécution représentée, la face de butée de chaque pied est constituée par deux épaulements 34 bordant un tenon 35 ménagé à l'extrémité du pied. Lors de l'engagement du pied, ces épaulements 34 viennent en appui sur les axes 26, comme montré à la figure 8 et cela juste avant que les verrous 28 se referment. Dans ces conditions, le pied est parfaitement tenu verticalement et transversalement par ses doigts de rétention 10 et par les axes 26 coopérant avec les verrous.

En cas de choc sur l'avant tendant à faire basculer le siège sur l'avant, dans le sens de la flèche 31 figure 8, le couple de basculement transmis à chaque pied et tendant à faire pivoter le pied autour de l'axe avant 26a à la figure 8, est annulé par le couple de retenue du crochet arrière 28d sur le doigt de rétention arrière 10a, de sorte que la liaison, ainsi obtenue, se surverrouille en cas de choc. Il en est de même en cas de choc arrière mettant alors en cause l'axe arrière 26b et le doigt de rétention avant 10b à la figure 8.

Chacun des pieds 4 et 6 porte des moyens de commande manuelle permettant de déverrouiller les verrous pour extraire les doigts de rétention 10. Dans la forme d'exécution représentée, chaque pied comporte, articulé sur un axe transversal 40, un levier inter appui 42 dont la branche inférieure 42a est munie d'une face d'appui 41 apte, comme montré à la figure 8, à venir en contact avec l'extrémité de la bascule supérieure 28a de l'un des verrous 28 pour faire pivoter ce verrou dans le sens de son dégagement du doigt de rétention correspondant. Cette extrémité est conformée en gradin, de manière à présenter une face de butée 43 apte, en fin de course d'ouverture, à venir en contact contre le doigt de rétention correspondant, pour limiter le pivotement du verrou. La branche supérieure 42b du levier 42 est reliée par une barre transversale 44, s'étendant sous l'assise, au levier 42 de l'autre pied avant.

Au moins l'un des leviers 42 est amené en position de repos sur une butée 45 du pied par des moyens de rappel 46, tel qu'un ressort.

Les figures 1 et 11 montrent que les pieds arrière 6 sont munis de leviers 49 similaires à ceux 42 mais dont la branche supérieure 49a ne constitue pas la commande manuelle, mais s'appuie sur un levier intermédiaire 47, lié à un axe 51 traversant le siège et sur lequel est également fixée la commande manuelle 48. Un alésage oblong 68 permet les débattements du levier par rapport à l'axe 7 du pied 6. Chaque commande 48 est reliée à celle de l'autre pied arrière par l'axe 51.

La figure 4 montre que lorsque les pieds sont engagés et verrouillés dans leur coulisseau respectif, la liaison est particulièrement résistante à l'arrachement grâce à l'appui des verrous 28 sur les doigts 10, et à l'articulation de ces verrous sur les axes 26 qui, prenant appui directement sur les ailes 22 du coulisseau, transmettent les efforts qu'ils reçoivent aux retours 15 et 18 de la glissière, et, par les galets 27, aux rainures longitudinales 16 de la glissière.

On notera que les mêmes résultats pourraient être obtenus en disposant les verrous non pas à l'intérieur des deux lames 4a, 4b constituant un pied, mais de part et d'autre de ces lames qui seraient alors juxtaposées et porteraient des doigts de rétention saillant latéralement de part et d'autre d'elles.

Ce siège est également remarquable par ses moyens de réglage de sa position longitudinale qui sont répartis dans le coulisseau 8 et sur le siège.

Les éléments disposés dans le coulisseau 8 comprennent, dans la forme d'exécution représentée et comme montré aux figures 2, 5 et 6, deux leviers 50 et une bascule 57. Les leviers 50 sont articulés sur les ailes 22 du coulisseau par des pivots 52 d'axe horizontal. Ils comportent, à l'une de leur extrémité, une denture 53 apte à coopérer avec les perforations 13b de la crémaillère 13, et, à leur autre extrémité, une chape 54. Cette chape est destinée à coopérer avec un axe 55 dont les extrémités sont emmanchées dans les deux ailes latérales 56 de la bascule 57. Cette bascule a une section transversale en U et chacune de ses parois latérales est solidaire, à chaque extrémité, d'une saillie latérale 58 qui est montée coulissante dans une lumière oblongue verticale 59, ménagée dans l'aile correspondante 22 du coulisseau. Des ressorts 60, disposés à proximité de chacune des extrémités de la bascule, prennent appui sur le fond du coulisseau et sous la bascule, en amenant les saillies 58 en butée contre les extrémités supérieures des lumières oblongues 59.

On notera déjà que tout appui manuel, exercé sur la face supérieure de la bascule 57 et hors de son axe de pivotement 52, et par exemple selon la flèche 61 de figure 6, permet de faire pivoter celle-ci par rapport à ses saillies 58 qui sont à droite sur la figure 6 et, en conséquence, de faire basculer le levier 50 dans le sens de la libération de la crémaillère.

Cet agencement permet donc de déplacer manuellement le coulisseau dans la glissière, par exemple pour l'amener dans la position choisie pour recevoir un siège.

Le même résultat peut être obtenu en appuyant selon la flèche 62 de figure 6, car alors la bascule pivote par rapport aux saillies latérales 58 qui sont disposées à gauche sur la figure 6 et entraînent le basculement du levier 50 dans le même sens.

Les moyens de commande de déverrouillage disposés de chaque côté du siège comprennent, comme montré à la figure 1, un poussoir 63 saillant sensiblement verticalement vers le bas de la branche interne 64a d'un levier 64, articulé sur l'axe 5 d'articulation des pieds avant. La branche externe avant 64b du levier 64 constitue le moyen de commande proprement dit qui est accessible sous l'avant du siège.

Dans la forme d'exécution représentée, la branche 64a du levier de commande 64 est attelée, par une liaison coulissante 65, avec l'extrémité de la branche interne 66a d'un autre levier 66 qui, articulé en 67 sur la structure d'assise, comporte une branche de commande 66b, accessible par l'arrière du siège.

Les branches 64b et 66b du dispositif de commande disposé d'un côté du siège sont reliées par des barres transversales aux branches correspondantes des dispositifs disposés de l'autre côté du siège.

Grâce à cet agencement, il est possible, de l'avant ou de l'arrière du siège, par exemple en tirant vers le haut la branche 64b ou la branche 66b, de communiquer au poussoir 63 un déplacement vertical vers le bas l'amenant en contact avec la bascule 57, à la place de la flèche 61 de figure 6 si le siège est dans la position de figure 1, ou à la place de la flèche 62, si le siège est retourné de 180 ° par rapport à la figure 1.

Il apparaît donc que, par rapport aux sièges actuels, amovibles et réglables longitudinalement, le siège selon l'invention permet, non seulement de commander le réglage longitudinal, quelle que soit la position tournée vers l'avant ou tournée vers l'arrière du siège, mais également dans chacune de ses positions, à partir de la partie avant ou de la partie arrière du siège, et cela sans compliquer la cmématique.

La figure 11 montre que, moyennant l'adjonction d'une bielle 70 entre chacun des pieds avant 4 et le pied arrière 6 correspondant, il est possible, lors du redressement du siège par rapport à ses pieds avant, de rabattre les pieds arrière 6 dans l'encombrement du siège.

Dans ce type de siège, pour améliorer la tenue procurée par les pieds avant 4, les épaulements 34 de chacun de ces pieds sont bordés, sur l'extérieur, par des retours coudés anti basculement 72.

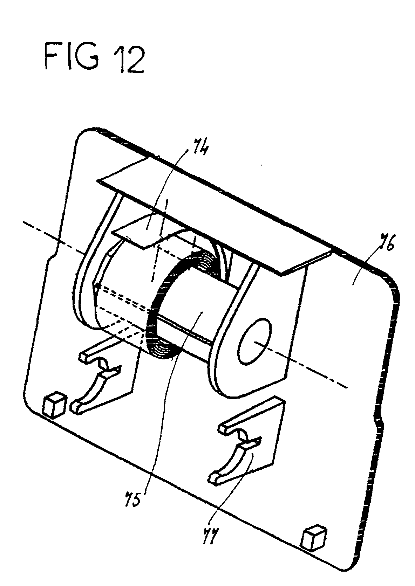

Pour éviter l'intrusion de corps étranger dans les glissières 9, à chacune des extrémités de chaque coulisseau 8 est accrochée l'une des extrémités d'un ruban protecteur métallique 74, par exemple de type mètre ruban. L'autre extrémité de chaque ruban est engagée sur un enrouleur à ressort 75 porté par un support 76 obturant l'extrémité correspondante de la glissière. Comme montré à la figure 12, le support 76 comporte deux demi paliers élastiques 77 qui s'encliquettent sur les pions 23 limitant la course du coulisseau dans la glissière. Comme le montre la figure 3, les bords longitudinaux de chaque ruban protecteur 74 circulent dans les rainures 19 ménagées dans les retours supérieurs 18 de la glissière 9. Ces rainures assurent la rigidité du ruban et lui permettent de résister à un effort de poinçonnage localisé, du type de celui exercé par un talon aiguille féminin.

Il ressort de ce qui précède que, en raison de sa conception, ce siège et ses moyens de fixation sur les coulisseaux permettent d'améliorer le dimensionnement des pièces, et en conséquence, d'améliorer la résistance du siège par rapport au plancher en cas d'accident, mais aussi libèrent les pieds du siège de toute présence de verrous, en évitant ainsi que ces verrous puissent être détériorés ou encrassés. Enfin, les positions judicieuses des moyens de commande améliorent les conditions de réglage du siège.

## Revendications

1. Siège pour véhicule, amovible, retournable et réglable longitudinalement dans lequel, d'une part, la structure (2) de l'assise est solidaire de quatre pieds (4, 6) en forme de tenons aptes chacun à coopérer avec des moyens complémentaires de liaison portés par deux coulisseaux (8), ces coulisseaux étant mobiles et blocables par rapport à deux glissières (9), parallèles et fixées au plancher du véhicule et, d'autre part, des verrous à actionnement manuel sont rappelés, par des moyens à ressorts, en position de verrouillage des pieds (4, 6) sur les coulisseaux (8), **caractérisé en ce que** chacun des pieds (4, 6) comporte au moins une partie en saillie transversale, formant organe de rétention (10),
tandis que le coulisseau (8) correspondant comporte, dans sa zone de réception de chaque pied (4 ou 6), au moins un verrou (28) en forme de crochet articulé sur lui et apte à s'effacer lors de l'introduction dans le coulisseau (8) de la saillie (10) du pied correspondant, avant de revenir crocheter cette saillie (10), sous l'action de ses moyens de rappel,
et que les moyens de déverrouillage manuels des verrous (28) sont portés par chacun des pieds (4 ou 6).

2. Siège amovible selon la revendication 1, **caractérisé en ce que** chacun des pieds (4 ou 6) porte, au-dessus de son extrémité inférieure, deux doigts cylindriques de rétention (10), transversaux et espacés longitudinalement, tandis que chaque coulisseau (8) comporte, dans chacune de ses deux zones de réception d'un pied, deux verrous (28) en forme de C montés, en opposition et avec possibilité de rotation, sur deux axes transversaux (26), ces deux axes traversant le coulisseau (8) et portant sur leurs extrémités, dépassant du coulisseau, des galets (27) roulants dans des rainures longitudinales (16) des glissières (9).

3. Siège selon l'ensemble des revendications 1 et 2, **caractérisé en ce que** les verrous (28) sont en forme de C à ailes inégales dont les ailes longues inférieures (28b) sont dentées et s'engrènent par des dentures (29) limitant leur basculement dans les deux sens, et dont les ailes courtes supérieures (28a) délimitent une ouverture (30), les bords supérieurs (32) des ailes courtes (28a) étant pentues vers cette ouverture (30) pour générer, sous l'appui du doigt de rétention (10) correspondant, un couple de basculement augmentant la largeur de l'ouverture (30), à l'encontre du couple de rappel d'un ressort (33) sollicitant l'un des verrous (28).

4. Siège selon la revendication 1, **caractérisé en ce que** les verrous (28) coopérant avec un pied (4 ou 6) sont disposés dans Un puits (25) de positionnement de ce pied, ce puits présentant des bords évasés (25a) étant formé dans un boîtier (21), rapporté dans le coulisseau (8).

5. Siège selon la revendication 1, **caractérisé en ce que** chaque pied (4 ou 6) comporte une face de butée (4b, 34) limitant son engagement vertical dans le coulisseau (8) en coopérant avec des portées complémentaires (8a, 26) de celui-ci.

6. Siège selon la revendication 5, **caractérisé en ce que** la face de butée de chaque pied (4 ou 6) est constituée par la face en bout(4b) de l'extrémité inférieure du pied et cette face en bout coopère avec une portée constituée par l'âme (8a) du coulisseau (8).

7. Siège selon la revendication 5, **caractérisé en ce que** la face de butée de chaque pied (4 ou 6) est constituée par les deux épaulements (34) d'un tenon (35) ménagé à l'extrémité inférieure du pied (4 ou 6) et ces deux épaulements coopèrent avec les axes (26) portant les verrous (28).

8. Siège selon la revendication 7, **caractérisé en ce que,** dans un siège basculable sur les pieds avant (4), les épaulements (34) de chacun des pieds avant (4) sont bordés, sur l'extérieur, par des retours coudés anti basculement (72).

9. Siège selon la revendication 1, **caractérisé en ce que** chaque pied (4 ou 6) porte un levier (42, 49), articulé et maintenu en appui par un ressort (46) sur une butée (45) solidaire de ce pied et la partie inférieure de ce levier comporte une face d'appui (41) apte, lors du basculement de ce levier articulé, à venir contre l'aile courte supérieure (28a) de l'un des verrous (28) pour le faire pivoter dans le sens du déverrouillage, et une face de butée (43), apte à venir contre l'axe (26) de rotation du verrou pour limiter la course de déverrouillage.

10. Siège selon la revendication 1, **caractérisé en ce que** les moyens de blocage de chaque coulisseau (8) dans sa glissière (9) comprennent :
- dans le coulisseau (8), au moins un levier (50) articulé sur le coulisseau autour d'un axe transversal (52) et dont une extrémité (53), traversant le fond du coulisseau, est dentée en correspondance avec la denture d'une crémaillère (13) rapportée sur le fond de la glissière (9), et une bascule (57) coiffant le levier (50), disposée dans le coulisseau (8) et portant un axe transversal (55) de liaison avec l'autre extrémité du levier (50) précité, cette bascule (57) étant munie à chaque extrémité, de saillies latérales (58), montées coulissantes dans des lumières verticales (59) du coulisseau, et de moyens à ressorts (60) plaquant lesdites saillies (58) contre l'extrémité supérieure des lumières (59), en maintenant la denture du levier (50) dans la crémaillère (13),
- et, sur la structure d'assise (2) un poussoir (63) apte à venir au-dessus de la bascule (57) du coulisseau (8) et saillant sensiblement verticalement vers le bas de la branche interne (64a) d'un levier (64), ledit levier (64) étant articulé sur la structure d'assise (2) et comportant une branche externe (64b) formant poignée de commande, ladite branche interne (64a) du levier (64) étant attelée à la branche interne (66a) d'un autre levier de commande (66), articulé sur la même structure d'assise mais actionnable de l'autre côté du siège.

11. Siège selon la revendication 1, **caractérisé en ce que** chacune des extrémités du coulisseau (8), est liée à l'extrémité d'un ruban protecteur métallique (74), monté coulissant par ses bords dans des rainures (19) en vis à vis ménagées dans la glissière, et dont l'autre extrémité coopère avec un enrouleur à ressort (75) porté par un support (76) obturant l'extrémité correspondante de la glissière (9).

## Patentansprüche

1. Herausnehmbarer, umschlagbarer und in Längsrichtung einstellbarer Fahrzeugsitz, bei welchem einerseits der Aufbau der Sitzfläche mit vier zapfenförmigen Füßen (4, 6) fest verbunden ist, die jeweils geeignet sind, mit komplementären Verbindungsmitteln zusammenzuwirken, welche von zwei Schlitten (8) getragen werden, wobei diese Schlitte bezüglich zweier paralleler und auf dem Boden des Fahrzeugs befestigter Gleitschienen (9) beweglich und blockierbar sind, und bei welchem andererseits Riegel zur manuellen Betätigung durch Federwerke zurückbewegt werden, wenn die Füße (4, 6) auf den Schlitten (8) eingerastet sind, **dadurch gekennzeichnet, dass** jeder Fuß (4, 6) wenigstens einen seitlich vorstehenden Teil umfasst, welcher ein Rückhaltmittel (10) bildet,
während der entsprechende Schlitten in seinem Aufnahmebereich für jeden Fuß (4 oder 6) wenigstens einen Riegel (28) in Form eines auf ihm schwenkbaren Hakens umfasst, welcher geeignet ist, beiseite zu gehen, wenn der Vorsprung (10) des entsprechenden Fußes in den Schlitten (8) eingeführt wird, bevor er diesen Vorsprung (10) unter Einwirkung seiner Rückstellmittel einhakt,
und dass die manuellen Entriegelungsmittel für die Riegel von jedem der Füße (4 oder 6) getragen werden.

2. Abnehmbarer Sitz nach Anspruch 1, **dadurch gekennzeichnet, dass** jeder der Füße (4 oder 6) auf seinem unteren Ende zwei querverlaufende und mit Längsabstand voneinander angeordnete, zylindrische Rückhaltestifte (10) trägt, während jeder Schlitten (8) in jeder seiner zwei Aufnahmebereiche für einen Fuß zwei C-förmige Riegel (28) umfasst, welche in Gegenstellung und mit der Möglichkeit der Rotation um zwei Querachsen (26) angebracht sind, wobei diese zwei Achsen den Schlitten (8) durchqueren und auf ihren Enden vom Schlitten hervorstehend Rollkörper (27) tragen, welche in den Längsrillen (16) der Gleitschienen (9) rollen.

3. Sitz nach den Ansprüchen 1 und 2, **dadurch gekennzeichnet, dass** die Riegel (28) in Form eines Cs mit ungleichen Flügeln ausgebildet sind, dessen lange, untere Flügel (28b) gezahnt sind und über Verzahnungen (29) ineinandergreifen, welche ihr Schwenken in die beiden Richtungen begrenzen, und deren kurze, obere Flügel (28a) eine Öffnung (30) begrenzen, wobei die oberen Ränder (32) der kurzen Flügel (28a) zu dieser Öffnung (30) geneigt sind, um unter dem Halt des entsprechenden Rückhaltestifts (10) ein Schwenkmoment zu erzeugen, welches die Weite der Öffnung (30) im Gegensatz zum Rückstellmoment einer Feder (33) vergrößert, welche einen der Riegel (28) belastet.

4. Sitz nach Anspruch 1, **dadurch gekennzeichnet, dass** die mit einem Fuß (4 oder 6) zusammenwirkenden Riegel (28) in einer Postionierungsvertiefung (25) für diesen Fuß vorgesehen sind, wobei diese Vertiefung konisch erweiterte Kanten (25a) hat, die in einem in den Schlitten (8) eingesetzten Gehäuse (21) gebildet sind.

5. Sitz nach Anspruch 1, **dadurch gekennzeichnet, dass** jeder Fuß (4 oder 6) eine Anschlagfläche (4b, 34) umfasst, welche sein vertikales Eingreifen in den Schlitten (8) begrenzt, indem sie mit den komplementären Auflageflächen (8a, 26) zusammenwirkt.

6. Sitz nach Anspruch 5, **dadurch gekennzeichnet, dass** die Anschlagfläche jedes Fußes (4 oder 6) aus der Endseite (4b) des unteren Endes des Fußes besteht und diese Endseite mit einer Auflagefläche zusammenarbeitet, die aus dem Steg (8a) des Schlittens (8) besteht.

7. Sitz nach Anspruch 5, **dadurch gekennzeichnet, dass** die Anschlagfläche jedes Fußes (4 oder 6) aus den beiden Aussparungen (34) eines Zapfens (35) besteht, der am unteren Ende des Fußes (4 der 6) angebracht ist, und dass diese beiden Aussparungen mit den Achsen (26), die die Riegel (28) tragen, zusammenwirken.

8. Sitz nach Anspruch 7, **dadurch gekennzeichnet, dass** die Aussparungen (34) von jedem der Vorderfüße (4) bei einem auf die Vorderfüße (4) schwenkbaren Sitz außen durch schwenkungsverhindemde, abgewinkelte Überhänge (72) eingefasst sind.

9. Sitz nach Anspruch 1, **dadurch gekennzeichnet, dass** jeder Fuß (4 oder 6) einen schwenkbaren Hebel (42, 49) trägt, der von einer Feder (46) ausschwenkbar und stützend auf einem Anschlag (45) gehalten wird, welcher mit diesem Fuß fest verbunden ist, und der untere Teil dieses Hebels umfasst eine eine Haltefläche (41), welche geeignet ist, an den kurzen oberen Flügel (28a) eines der Riegel (28) anzuschlagen, wenn der schwenkbare Hebel gekippt wird, um den Riegel in eine Entriegelungsrichtung schwenken zu lassen, und eine Anschlagfläche (43), die geeignet ist, gegen die Rotationsachse (26) des Riegels anzuschlagen, um den Entriegelungsweg zu begrenzen.

10. Sitz nach Anspruch 1, **dadurch gekennzeichnet, dass** die Blockiermittel jedes Schlittens (8) auf seiner Gleitschiene (9) umfassen :
- im Schlitten (8) wenigstens einen Hebel (50), der um eine Querachse (52) auf dem Schlitten (8) schwenkbar ist, und von dem ein durch den Boden des Schlittens geführtes Ende (53) entsprechend der Zahnung eines in den Boden der Gleitschiene (9) eingesetzten Lochblechs (13) gezahnt ist, und ein den Hebel (50) überdeckender Schwengel (57), der in dem Schlitten (8) angeordnet ist und eine Querachse (55) zum Verbinden mit dem anderen Ende des vorgenannten Hebels (50) aufweist, wobei dieser Schwengel (57) an jedem Ende mit seitlichen Vorsprüngen (58) ausgestattet ist, welche verschiebbar in den vertikalen Schlitzlöchern (59) des Schlittens montiert sind, und mit Federwerken (60), welche die Vorsprünge (58) gegen das obere Ende der Schlitzlöcher (59) drücken, und dabei die Zahnung des Hebels (50) im Lochblech (13) festhalten,
- und auf dem Aufbau der Sitzfläche (2) einen Vordrücker (63), der geeignet ist, über den Schwengel (57) des Schlittens (8) zu kommen, und der im Wesentlichen vertikal zum unteren Teil der des Innenschenkels (64a) eines Hebels (64) vorsteht, wobei dieser Hebel (64) auf dem Aufbau der Sitzfläche (2) gelenkig angeordnet ist und einen Außenschenkel (64b) umfasst, welcher einen Bedienungshandgriff darstellt, wobei der Innenschenkel (64a) des Hebels (64) an den Innenschenkel (66a) eines anderen Bedienungshebels (66) angekuppelt ist, welcher auf dem gleichen Sitzaufbau, jedoch schwenkbar von der anderen Seite des Sitzes aus betätigbar ist.

11. Sitz nach Anspruch 1, **dadurch gekennzeichnet, dass** jedes der Enden des Schlittens (8) mit dem Ende eines Schutzstreifens aus Metall (74) verbunden ist, welches durch seine Ränder verschiebbar in den gegenüberliegenden Rillen (19) angebracht ist, welche auf der Gleitschiene angebracht sind, und dass dessen anderes Ende mit einer Federaufrollmaschine (75) zusammenwirkt, welche von einem Träger (76) getragen wird, der das entsprechende Ende der Gleitschiene (9) versperrt.

## Claims

1. A removable, reversible and longitudinally adjustable vehicle seat in which, on the one hand, the structure (2) of the sitting portion is secured to four legs (4, 6) in the form of tenons, each capable of cooperating with complementary connecting means borne by two runners (8), these runners being movable and immobilisable in relation to two slideways (9), which are parallel and fixed to the vehicle floor, and, on the other hand, manually actuable catches are returned, by spring means, into the position in which the legs (4, 6) are locked to the runners (8), **characterised in that** each of the legs (4, 6) includes at least one transverse projecting part, forming a retaining member (10),
whereas the corresponding runner (8) includes, in its region for receiving each leg (4 or 6), at least one hook-shaped catch (28) which is articulated thereon and is capable of moving aside upon the introduction of the projection (10) of the corresponding leg into the runner (8), before returning to hook onto this projection (10) under the action of its return means,
and **in that** the manual means for unlocking the catches (28) are borne by each of the legs (4 or 6).

2. A removable seat according to Claim 1, **characterised in that** each of the legs (4 or 6) bears, above its lower end, two transverse and longitudinally spaced cylindrical retaining fingers (10), whereas each runner (8) includes, in each of its two regions for receiving a leg, two C-shaped catches (28) mounted, in opposition and with the possibility of rotation, on two transverse pins (26), these two pins passing through the runner (8) and bearing on their ends, projecting from the runner, rollers (27) which roll in longitudinal grooves (16) in the slideways (9).

3. A seat according to both of Claims 1 and 2, **characterised in that** the catches (28) are in the shape of a C with unequal sides, the long lower sides (28b) of which are toothed and mesh via sets of teeth (29) limiting their tilting in both directions, and the short upper sides (28a) of which delimit an opening (30), the upper edges (32) of the short sides (28a) being inclined towards this opening (30) in order to generate, under the pressure of the corresponding retaining finger (10), a tilting torque which increases the width of the opening (30), counter to the return torque of a spring (33) acting on one of the catches (28).

4. A seat according to Claim 1, **characterised in that** the catches (28) cooperating with a leg (4 or 6) are arranged in a well (25) for positioning this leg, this well having splayed edges (25a) and being formed in a housing (21) mounted in the runner (8).

5. A seat according to Claim 1, **characterised in that** each leg (4 or 6) includes a stop face (4b, 34) limiting its vertical engagement in the runner (8) by cooperating with complementary bearing surfaces (8a, 26) of the latter.

6. A seat according to Claim 5, **characterised in that** the stop face of each leg (4 or 6) is formed by the end face (4b) of the lower end of the leg and this end face cooperates with a bearing surface formed by the web (8a) of the runner (8).

7. A seat according to Claim 5, **characterised in that** the stop face of each leg (4 or 6) is formed by the two shoulders (34) of a tenon (35) made at the lower end of the leg (4 or 6) and these two shoulders cooperate with the pins (26) bearing the catches (28).

8. A seat according to Claim 7, **characterised in that,** in a seat tiltable on the front legs (4), the shoulders (34) of each of the front legs (4) are bordered, on the outside, by bent anti-tilting returns (72).

9. A seat according to Claim 1, **characterised in that** each leg (4 or 6) bears a lever (42, 49), articulated and kept in bearing contact, by a spring (46), with a stop (45) integral with this leg and the lower part of this lever includes a bearing face (41) capable, upon the tilting of this articulated lever, of coming against the short upper side (28a) of one of the catches (28) in order to cause it to pivot in the unlocking direction, and a stop face (43) capable of coming against the pin (26) for the rotation of the catch in order to limit the unlocking travel.

10. A seat according to Claim 1, **characterised in that** the means for immobilising each runner (8) in its slideway (9) comprise:
- in the runner (8), at least one lever (50) which is articulated on the runner about a transverse pin (52) and of which one end (53), passing through the bottom of the runner, is toothed in correspondence with the set of teeth of a rack (13) mounted on the bottom of the slideway (9), and a rocker (57) which covers the lever (50), is arranged in the runner (8) and bears a transverse pin (55) for connection to the other end of the aforementioned lever (50), this rocker (57) being equipped, at each end, with lateral projections (58) mounted to slide in vertical slots (59) in the runner, and with spring means (60) which press the said projections (58) against the upper end of the slots (59), keeping the set of teeth of the lever (50) in the rack (13);
- and, on the structure (2) of the sitting portion, a pusher (63) which is capable of coming above the rocker (57) of the runner (8) and projects substantially vertically downwards from the inner limb (64a) of a lever (64), the said lever (64) being articulated on the sitting portion structure (2) and including an outer limb (64b) forming a control handle, the said inner limb (64a) of the lever (64) being coupled to the inner limb (66a) of another control lever (66), articulated on the same sitting portion structure but actuable from the other side of the seat.

11. A seat according to Claim 1, **characterised in that** each of the ends of the runner (8) is connected to the end of a protective metal tape (74), mounted to slide via its edges in opposite grooves (19) made in the slideway, and the other end of which cooperates with a spring winder (75) borne by a support (76) which closes off the corresponding end of the slideway (9).
